# EUROPÄISCHE PATENTANMELDUNG

(11) **EP 4 585 475 A1**
(43) Veröffentlichungstag der Anmeldung: **16.07.2025**
(21) Anmeldenummer: 24151621.0
(22) Anmeldetag: 12.01.2024
(51) Int. Cl.: B60T 1/04, B60T 17/22, B61H 1/00, F16D 66/02

(54) **BREMSVORRICHTUNG MIT ABSTANDSSENSOR ZUM EINSATZ BEI EINER ZWILLINGSACHSE EINES SPURGEFÜHRTEN FAHRZEUGS, ABSTANDSSENSOR UND VERFAHREN ZUM BETREIBEN EINER BREMSVORRICHTUNG**

(71) Anmelder: Siemens Mobility GmbH, 81739 München (DE)
(72) Erfinder: Leitel, Holger, 82049 Pullach (DE)
(74) Vertreter: Siemens Patent Attorneys

(57) **Zusammenfassung**

Die Erfindung umfasst eine Bremsvorrichtung zum Einbau in den Zwischenraum (ZR) zwischen den Rädern einer Zwillingsachse eines spurgeführten Fahrzeugs. Die Bremsvorrichtung (BV) besteht aus zwei relativ zueinander beweglichen Teileinheiten, nämlich einer ersten Teileinheit (TE1) mit Bremsbelägen (BRB) für die Räder der ersten Achse der Zwillingsachse und einer zweiten Teileinheit (TE2) mit Bremsbelägen (BRB) für die Räder der zweiten Achse der Zwillingsachse. Die Teileinheiten im eingebauten Zustand sind derart verschiebbar gelagert, dass durch das Verschieben der Teileinheiten ein Kontakt zwischen den Bremsbelägen (BRB) und den Rädern zustande kommt. In einer der Teileinheiten der Bremsvorrichtung (BV) ist mindestens ein Abstandssensor (ABS) angeordnet. Der Abstandssensor (ABS) ist eingerichtet, einen Abstand zwischen der ersten Teileinheit (TE1) und der zweiten Teileinheit (TE2) zu messen. Ferner sind ein spurgeführtes Fahrzeug mit einer Zwillingsachse, ein Abstandssensor, ein Verfahren zum Betreiben einer Bremsvorrichtung sowie ein Computerprogramm umfasst.

## Beschreibung

### Technisches Gebiet

Folgender Gegenstand ist von der Erfindung umfasst: eine Bremsvorrichtung zum Einbau in den Zwischenraum zwischen den Rädern einer Zwillingsachse eines spurgeführten Fahrzeugs. Ferner ist folgender Gegenstand von der Erfindung umfasst: ein spurgeführtes Fahrzeug mit einer Zwillingsachse und einer in einem Zwischenraum der Zwillingsachse eingebauten Bremsvorrichtung. Ferner ist folgender Gegenstand von der Erfindung umfasst: ein Abstandssensor mit einer Messvorrichtung. Ferner ist folgender Gegenstand von der Erfindung umfasst: ein Verfahren zum Betreiben einer Bremsvorrichtung. Ferner ist folgender Gegenstand von der Erfindung umfasst: ein Computerprogramm, umfassend Programmbefehle. Ferner ist folgender Gegenstand von der Erfindung umfasst: ein Computerlesbares Speichermedium für Daten.

### Technischer Hintergrund

Die Prüfung, welcher Bremszustand bei spurgeführten Fahrzeugen vorliegt, ob die Handbremse gelöst oder angezogen ist, ob alle Bremsklötze eines Drehgestells vorhanden sind und eine ausreichende Belagstärke aufweisen, wird derzeit üblicherweise durch eine manuelle optische Kontrolle durch den Wagenmeister bei der Abfertigung eines Zuges sichergestellt. Gemäß dem Stand der Technik ist es aber auch bekannt, dass die Funktion einer Bremsvorrichtung mittels eines Abstandsensors überprüft werden kann, der eine Verschiebung eines Gestänges für die Bremsvorrichtung detektiert.

In dem Dokument AU 199726833 B2 ist auch beschrieben, dass eine Bremsvorrichtung zum Einbau in den Zwischenraum zwischen den Rädern einer Zwillingsachse eines spurgeführten Fahrzeugs vorgesehen werden kann, wobei die Bremsvorrichtung aus zwei relativ zueinander beweglichen Teileinheiten besteht. Diese Bremsvorrichtung wird mit einem Gestänge betätigt, welches in dem Fahrzeug angebracht ist. Daher kann in dem Fahrzeug ortsfest ein Abstandssensor eingebaut werden, der einen Abstand zu einem charakteristischen Punkt dieses Bremsgestänges misst und so einen Rückschluss über die Stellung der Bremse (gelöst, angelegt) erlaubt.

Der EP 1593571 B1 lässt sich weiterhin eine Bremsvorrichtung entnehmen, welche mit einer Aufhängung in dem Zwischenraum befestigt ist, welcher durch die Zwillingsachse eines Drehgestells für ein spurgeführtes Fahrzeug gebildet wird. Sobald die Bremsvorrichtung betätigt wird, klemmt sich diese mit Bremsbelägen zwischen die Räder der Zwillingsachse indem die Bremsbeläge auf die Radreifen der Räder gepresst werden. Diese Bremsvorrichtung bildet eine kompakte Baueinheit, die vormontiert und mittels der Aufhängung in dem Drehgestell gelagert werden kann. Diese wird daher im Folgenden auch kurz als Compact-Bremse bezeichnet.

Aus dem erläuterten Stand der Technik ergibt sich das Problem, dass die Verwendung eines Abstandsensors entsprechend der in AU 199726833 B2 beschriebenen Umsetzung in der Compact-Bremse nicht möglich ist, da durch die hängende Aufhängung der Bremsvorrichtung kein definierter Abstand zwischen der letzteren und anderen Teilen des Fahrzeugs ergibt.

### Zusammenfassung der Erfindung

Die Aufgabe der Erfindung besteht darin, die beschriebenen Probleme im Stand der Technik zu beheben. Insbesondere ist es Aufgabe, dass eine Bremsvorrichtung für ein spurgeführtes Fahrzeug bzw. ein spurgeführtes Fahrzeug mit einer Bremsvorrichtung bzw. ein Verfahren zum Betreiben einer solchen Bremsvorrichtung bzw. ein Computerprogramm zum Ausführen dieses Verfahrens sowie eine Bereitstellungsvorrichtung für ein solches Computerprogramm dahingehend verbessert wird, dass auch bei einer kompakten Bauform der Bremsvorrichtung eine Sensorik zur Messung eines charakteristischen Abstandes zum Einsatz kommen kann.

Beschrieben wird gemäß einem ersten Aspekt der Erfindung eine Bremsvorrichtung zum Einbau in den Zwischenraum zwischen den Rädern einer Zwillingsachse eines spurgeführten Fahrzeugs, wobei
a) die Bremsvorrichtung aus zwei relativ zueinander beweglichen Teileinheiten, nämlich einer ersten Teileinheit mit Bremsbelägen für die Räder der ersten Achse der Zwillingsachse und einer zweiten Teileinheit mit Bremsbelägen für die Räder der zweiten Achse der Zwillingsachse besteht,
b) die Teileinheiten in dem Zwischenraum angeordnet sind und in diesem derart verschiebbar gelagert sind, dass durch das Verschieben der Teileinheiten ein Kontakt zwischen den Bremsbelägen und den Rädern zustande kommt.

Der Aufbau der Bremsvorrichtung, bestehend aus einer ersten Teileinheit und einer zweiten Teileinheit, stellt das charakteristische Merkmal von Compact-Bremsen dar. Die Teileinheiten tragen jede einen Teil der zum Einsatz kommenden Bremsbeläge, sodass die mechanische Hauptfunktion, das Bremsen der Räder einer Zwillingsachse, insbesondere in einem Drehgestell, durch diese beiden Teileinheiten vollständig ausgeführt werden kann. Weitere Funktionseinheiten der Bremsvorrichtung, die nicht mit dem mechanischen Bremsvorgang zusammenhängen, beispielsweise Sensorik oder Energieversorgung, können auch außerhalb der Bremsvorrichtung angebracht sein. Der mechanische Aktuator, der eine Relativbewegung zwischen den Teileinheiten hervorruft und damit zu einem Kontakt der Bremsbeläge mit den Rädern (Bremse anlegen) und einem Beenden des Bremsvorganges (Bremse lösen) beiträgt, ist Teil der Bremsvorrichtung und damit sowohl mit der ersten Teileinheit als auch mit der zweiten Teileinheit mechanisch verbunden.

Die mechanisch verschiebbare Lagerung der Teileinheiten ermöglicht es, dass sich die Teileinheiten, hervorgerufen durch den Aktuator, relativ zueinander bewegen können, vorzugsweise in horizontaler Richtung oder zumindest im Wesentlichen in horizontaler Richtung (hierzu im Folgenden noch mehr). Diese Relativbewegung der beiden Teileinheiten führt dazu, dass die Bremsvorrichtung sich mit den durch die Teileinheiten gelagerten Bremsbelägen auf die zu bremsenden Räder der Zwillingsachse zubewegen und diese bremsen können. Dadurch, dass die Bremsvorrichtung zwischen den Rädern angeordnet ist, heben sich während des Bremsens die Normalkräfte, die auf die gegenüberliegenden Bremsbeläge aufgebracht werden müssen, damit eine Bremskraft entsteht, gerade auf. Dies trägt zur kompakten Bauform der Bremsvorrichtung bei.

Rechnergestützt oder computerimplementiert ist eine Vorrichtung, wenn diese mindestens einen Computer oder Prozessor aufweist, oder ein Verfahren, wenn mindestens ein Computer oder Prozessor mindestens einen Verfahrensschritt des Verfahrens ausführt.

Eine Rechenumgebung ist eine IT-Infrastruktur, bestehend aus Funktionskomponenten wie Prozessoren, Speichereinheiten, Programmen und aus mit den Programmen zu verarbeitenden Daten, die zur Ausführung mindestens einer Applikation, die eine Aufgabe zu erfüllen hat, verwendet werden. Weitere Funktionskomponenten können aus Sensoren und Aktuatoren bestehen, welche eine Interaktion der Rechenumgebung mit der Außenwelt ermöglichen. Die IT-Infrastruktur kann auch als Netzwerk der genannten Funktionskomponenten organisiert sein.

Computer sind aus mehreren Funktionskomponenten bestehende elektronische Geräte mit Datenverarbeitungseigenschaften. Computer können beispielsweise Clients, Server, Handheld-Computer, Kommunikationsgeräte und andere elektronische Geräte zur Datenverarbeitung sein, die Prozessoren und Speichereinheiten aufweisen können und über Schnittstellen auch zu einem Netzwerk zusammengeschlossen sein können.

Prozessoren können beispielsweise Wandler, Sensoren zur Erzeugung von Messsignalen oder elektronische Schaltungen sein. Bei einem Prozessor kann es sich um einen Hauptprozessor (engl. Central Processing Unit, CPU), einen Mikroprozessor, einen Mikrocontroller, oder einen digitalen Signalprozessor, möglicherweise in Kombination mit einer Speichereinheit zum Speichern von Programmbefehlen und Daten handeln. Auch kann unter einem Prozessor ein virtualisierter Prozessor oder eine Soft-CPU verstanden werden.

Speichereinheiten können als computerlesbarer Speicher in Form eines Arbeitsspeichers (engl. Random-Access Memory, RAM) oder Datenspeichers (Festplatte oder Datenträger) ausgeführt sein.

Schnittstellen können hardwaretechnisch, beispielsweise kabelgebunden oder als Funkverbindung, oder softwaretechnisch, beispielsweise als Interaktion zwischen einzelnen Programmmodulen eines oder mehrerer Computerprogramme, realisiert sein.

Zur Vermeidung von Missverständnissen sei an dieser Stelle angemerkt, dass einzelne Anspruchsmerkmale mit kleinen lateinischen Buchstaben durchnummeriert werden, ohne dass dabei Rücksicht auf die Anspruchsnummerierung genommen wird. Dies bedeutet, dass jeder Buchstabe im gesamten Anspruchssatz nur einmal vorkommt, was eine eindeutige Adressierung der betreffenden Anspruchsmerkmale ohne Nennung der Anspruchsnummer ermöglicht. Deswegen kommt der Reihenfolge der Buchstaben jedoch keine Bedeutung zu.

Erfindungsgemäß ist vorgesehen, dass
c) in einer der Teileinheiten der Bremsvorrichtung mindestens ein Abstandssensor angeordnet ist,
d) der Abstandssensor eingerichtet ist, einen Abstand zwischen der ersten Teileinheit und der zweiten Teileinheit zu messen.

Mit der erfindungsgemäßen Sensoranordnung ist es möglich, bei sogenannten klotzgebremsten Fahrzeugen aufgrund der Axialverschiebung der beiden Teileinheiten zu prüfen, ob noch alle Beläge vorhanden sind und ob die Stärke der verwendeten Bremsbeläge noch ausreicht und ob die Bremsen gelöst sind, oder tatsächlich anliegen. Dies bedeutet vorteilhaft, dass eine sensorgestützte Überwachung der Bremsbeläge mit nur geringem messtechnischen Aufwand ermöglicht wird, denn eine Änderung des gemessenen Abstands kann direkt mit einem Weg der Bremsbeläge von einem gelösten in einem angelegten Zustand der Bremse und umgekehrt in Zusammenhang gebracht werden, ohne dass eine Umrechnung erfolgen muss. Dies gilt zumindest dann, wenn die Abstandsmessung zwischen der ersten Teileinheit und der zweiten an Teileinheit in horizontaler Ausrichtung parallel zur Fahrtrichtung des Fahrzeugs erfolgt.

Außerdem kann ein Fahrzeug auch durch Nachrüsten der erfindungsgemäßen Sensoranordnung modernisiert werden, da die Messanordnung mit dem Abstandssensor (und evtl. weiteren Funktionskomponenten) auf der Oberfläche der Teileinheiten der Bremsvorrichtung befestigt werden können, ohne dass die betreffenden (möglicherweise zulassungsrelevanten) Bauteile selbst in ihrer Funktion oder Gestalt modifiziert werden müssten.

Ein Abstandssensor lässt sich vorteilhaft kostengünstig herstellen und montieren, wodurch eine wirtschaftliche Lösung der Aufgabe gelingt. Typischerweise besteht der Abstandssensor aus einer Messeinheit, die an einer der Teileinheiten angebracht wird (z. B. Messprinzipien mittels Ultraschall oder Radarwellen). Der Abstand zu einem charakteristischen Punkt der anderen Teileinheit lässt sich in diesem Fall einfach ermitteln. Es gibt jedoch auch Sensorprinzipien, bei denen die Sensoreinrichtung zweiteilig ausgeführt ist und je eine Sensoreinheit am Anfang und am Ende des zu messenden Abstands angebracht wird (z. B. Messprinzip mit einem dem Sender und gegenüberliegenden Empfänger oder ein Seilzug zwischen den Teileinheiten). In diesem Fall ist der Abstandssensor an beiden Teileinheiten befestigt.

Wie erwähnt, sind die Teileinheiten relativ zueinander beweglich. Relativ zueinander beweglich ist im Sinne der Mechanik zu verstehen. d. h., dass zumindest der Abstand der Teileinheiten zueinander veränderlich ist. Die Bewegung der beweglichen Funktionskomponente führt dann im mechanischen Sinne zu einer Relativbewegung der beiden Funktionskomponenten zueinander. Besonders vorteilhaft ist es, wenn beide Teileinheiten beweglich im Fahrzeug angeordnet sind (hierzu im Folgenden noch mehr).

Ein Vorteil der Erfindung besteht darin, dass der Abstandssensor platzsparend in der kompakt aufgebauten Bremsvorrichtung untergebracht werden kann. Dabei können Relativbewegungen zwischen der ersten Teileinheit und der zweiten Teileinheit gemessen werden, wodurch zuverlässig der Zustand der Bremse ermittelt werden kann. Wie im Folgenden noch näher erläutert wird, können sowohl typische Betriebszustände (Bremse angelegt, Bremse gelöst) sowie Fehlfunktionen ermittelt werden. Mit dem ebenfalls vorgestellten Verfahren ist es möglich, bei Fahrzeugen, die insbesondere mit einer Compact-Bremse (CFCB) ausgestattet sind, am Wagen zu prüfen, wie der tatsächliche Bremszustand des Fahrzeugs ist, ob die Handbremse betätigt wurde, ob noch alle Beläge für eine Doppelachse, die normalerweise Teil eines Drehgestells sind, vorhanden sind und ob die Belagstärke der Brembeläge noch über einem vorher definierten Grenzwert liegt.

Es können je nach Lage der technischen Anforderungen können ein Abstandssensor oder mehrere Abstandssensoren verbaut werden. Wird nur ein Abstandssensor verbaut, so ist es vorteilhaft, diesen fahrzeugmittig anzuordnen, zum Beispiel in der Mitte bezogen auf die Räder einer der Zwillingsachsen, d. h. nahe oder in einer senkrecht und in Fahrtrichtung ausgerichteten Symmetrieebene der Bremsvorrichtung. Diese Bauform weist den Vorteil auf, dass sie mit einem minimalen Aufwand an Komponenten auskommt und daher besonders kostengünstig realisierbar ist. Werden zwei Abstandssensoren verbaut, so ist es vorteilhaft, diese bezogen auf die Fahrtrichtung bzw. die genannte Symmetrieebene symmetrisch anzuordnen, vorzugsweise nahe der jeweiligen Räder der Achsen. Diese Bauform kann vorteilhaft gewählt werden, wenn in der Mitte des Fahrzeugs kein Bauraum für den Abstandsensor zur Verfügung steht. Außerdem schafft die Verwendung von zwei Sensoren Redundanz, sodass bei Ausfall eines Sensors zumindest eingeschränkt noch Messwerte erzeugt werden können. Zudem ist es vorteilhaft möglich, die beiden Abstandswerte miteinander zu vergleichen, um zu ermitteln, ob die Stellwege des Aktuators auf der linken Seite und der rechten Seite der Bremsvorrichtung voneinander abweichen.

Weichen die Stellwege des Aktuators rechts und links voneinander ab, weist dies auf einen mechanischen Fehler in der Bremsvorrichtung oder den Verlust mindestens eines Bremsbelages nur auf einer Seite der Bremsvorrichtung hin (was den Regelfall beim Verlust von Bremsbelägen darstellt). Im Falle des Verlustes eines Bremsbelags kann somit auch eine Information generiert werden, auf welcher Seite der Bremsbelag verloren gegangen ist. Auf dieser Seite wird sich der Stellweg nämlich sprunghaft vergrößern, während auf der anderen Seite der Stellweg innerhalb der vorher ermittelten Toleranzen bleiben wird. Diese Information kann zum Erzeugen einer Meldung verwendet werden, die auf die Seite des Bremsbelag Verlustes gerichtet ist.

Beschrieben wird gemäß einem weiteren Aspekt der Erfindung ein spurgeführtes Fahrzeug mit einer Zwillingsachse und einer in einem Zwischenraum der Zwillingsachse eingebauten Bremsvorrichtung, wobei
e) die Bremsvorrichtung aus zwei relativ zueinander beweglichen Teileinheiten, nämlich einer ersten Teileinheit mit Bremsbelägen für die Räder der ersten Achse der Zwillingsachse und einer zweiten Teileinheit mit Bremsbelägen für die Räder der zweiten Achse der Zwillingsachse besteht,
f) die Teileinheiten in dem Zwischenraum angeordnet sind und in diesem derart verschiebbar gelagert sind, dass durch das Verschieben der Teileinheiten ein Kontakt zwischen den Bremsbelägen und den Rädern zustande kommt,
g) ein Abstandssensor für die Ermittlung einer Bremsstellung in dem Fahrzeug angeordnet ist.

Die in dem Fahrzeug zum Einsatz kommende Bremsvorrichtung entspricht genau der oben bereits beschriebenen Bremseinrichtung. Der Einbau der Bremsvorrichtung erfolgt somit nach den vorstehend bereits beschriebenen Gesichtspunkten zwischen den Achsen der Zwillingsachse / des Drehgestells, sodass sich eine kompakte Einbausituation ergibt.

Erfindungsgemäß sind die oben erklärten Aspekte der Erfindung dadurch bestimmt, dass h) in zumindest einer der Teileinheiten der Bremsvorrichtung ein Abstandssensor angeordnet ist,
i) der Abstandssensor eingerichtet ist, einen Abstand zwischen der ersten Teileinheit und der zweiten Teileinheit zu messen.

Die mit dem Einsatz dieser Bremseinrichtung verbundenen Vorteile werden auch mit dem letztgenannten Fahrzeug erreicht, weswegen an dieser Stelle lediglich auf diese Vorteile verwiesen wird.

Beschrieben wird gemäß einem weiteren Aspekt der Erfindung ein Abstandssensor mit einer Messvorrichtung und mit einer Befestigungsvorrichtung. Erfindungsgemäß sind die oben erklärten Aspekte der Erfindung dadurch bestimmt, dass die Befestigungsvorrichtung dazu eingerichtet ist, mit einer Teileinheit einer Bremsvorrichtung gemäß einem der voranstehenden Ansprüche verbunden zu werden.

Der Abstandssensor kann somit in einem Fahrzeug bzw. einer Bremsvorrichtung, wie vorstehend beschrieben, eingesetzt werden. Damit werden die bereits erläuterten Vorteile erreicht, auf welche an dieser Stelle verwiesen wird.

Beschrieben wird gemäß einem weiteren Aspekt der Erfindung ein rechnergestütztes Verfahren zum Betreiben einer Bremsvorrichtung, wie vorstehend beschrieben, oder eines spurgeführten Fahrzeugs mit einer Bremsvorrichtung, wie vorstehend beschrieben.

Das Verfahren ist somit insbesondere geeignet, die erfindungsgemäßen Vorteile bei dem Betrieb der besagten Bremsvorrichtung sowie des besagten Fahrzeugs zu erreichen.

Gemäß der Erfindung sind die oben erklärten Aspekte der Erfindung dadurch bestimmt, dass mit einem Abstandssensor ein Abstand zwischen einer ersten Teileinheit und einer zweiten Teileinheit der Bremsvorrichtung gemessen wird.

Wie bereits erläutert, ist es vorteilhaft möglich, den Abstandssensor bei dem Messverfahren sehr platzsparend zwischen den Teileinheiten der Bremsvorrichtung unterzubringen und die durch eine Relativbewegung zwischen der ersten Teileinheit und der zweiten Teileinheit bedingte Wegänderung unmittelbar, das heißt ohne Umrechnungsfaktoren, zu messen. Hierdurch bleibt die kompakte Bauform der Bremsvorrichtung vorteilhaft erhalten.

Als Messverfahren eigenen sich grundsätzlich alle Methoden zur Distanzmessung. Aufgrund der rauen Umgebungsbedingungen sind aber Verfahren, die keine mechanische Verbindung zwischen den beiden Teileinheiten benötigen von Vorteil. Weiterhin sind Verfahren von Vorteil, die sich nicht oder nur wenig durch Ablagerungen wie Eis oder Schnee auf dem Sensor beeinflussen lassen. Am vorteilhaftesten ist daher eine Abstandmessung per Radar im höheren Frequenzbereich (z.B. 60 GHz) anzusehen, da eine solche Messmethode unter den beschriebenen Messbedingungen vergleichsweise unempfindlich ist.

Beschrieben wird gemäß einem weiteren Aspekt der Erfindung ein Computerprogramm, umfassend Programmbefehle, die bei der Ausführung des Programms durch einen Computer diesen dazu veranlassen, das vorstehend beschriebene Verfahren auszuführen.

Gemäß der Erfindung wird somit ein Programmmodule enthaltendes Computerprogrammprodukt mit Programmbefehlen beschrieben, wobei die Programmmodule auf demselben oder mehreren Prozessoren laufen können. Mittels des Computerprogrammproduktes, das ein Computerprogramm oder mehrere Computerprogramme umfassen kann, sind jeweils das erfindungsgemäße Verfahren und/oder dessen Ausführungsbeispiele ausführbar und mit der Ausführung werden die vorstehend beschriebenen Vorteile erreicht.

Beschrieben wird gemäß einem weiteren Aspekt der Erfindung ein Computerlesbares Speichermedium für Daten, welches Datensätze des Computerprogrammproduktes nach dem letzten voranstehenden Anspruch speichert.

Darüber hinaus wird somit eine Bereitstellungsvorrichtung zum Speichern und/oder Bereitstellen des Computerprogramms in Form eines computerlesbaren Speichermediums beschrieben. Die Bereitstellungsvorrichtung ist beispielsweise eine Speichereinheit, die das Computerprogramm speichert und zum Abruf bereitstellt. Alternativ oder zusätzlich ist die Bereitstellungsvorrichtung ein Netzwerkdienst, ein Computersystem, ein Serversystem, insbesondere ein verteiltes, beispielsweise cloudbasiertes Computersystem oder virtuelles Rechnersystem, welches das Computerprogramm auf einem computerlesbaren Speichermedium speichert und vorzugsweise in Form eines Datenstroms bereitstellt.

Die Bereitstellung erfolgt in Form von Programmmodule beschreibenden Programmdatensätzen als Datei, insbesondere als Downloaddatei, oder als Datenstrom, insbesondere als Downloaddatenstrom, des Computerprogramms. Das Computerprogramm wird beispielsweise unter Verwendung der Bereitstellungsvorrichtung in eine Rechenumgebung übertragen, sodass das erfindungsgemäße Verfahren in einer Recheninstanz oder mehreren Recheninstanzen dieser Rechenumgebung zur Ausführung gebracht werden kann.

### Allgemeine Ausführungsbeispiele der Erfindung

Weiterbildungen der Erfindung beschreibende Varianten werden nachfolgend ohne Beschränkung des grundlegenden Gedankens der Erfindung erläutert.

Gemäß einer Variante sind die oben erklärten Aspekte der Erfindung dadurch bestimmt, dass die Bremsvorrichtung als selbsttragende Baueinheit ausgeführt ist, welche mechanische Lager für eine Befestigung am spurgeführten Fahrzeug aufweist.

Eine selbsttragende Baueinheit kann vorteilhaft vormontiert werden und zur Endmontage eines Fahrzeugs direkt angeliefert werden. Hierdurch können Kostenvorteile bei der Montage erreicht werden. Außerdem kann die Funktion der Bremsvorrichtung und insbesondere auch des Abstandssensors vor der Auslieferung oder der Montage der Bremseinheit überprüft werden, wodurch eine verbesserte Qualitätssicherung ermöglicht wird.

Gemäß einer Variante sind die oben erklärten Aspekte der Erfindung dadurch bestimmt, dass die mechanischen Lager aus einer Aufhängung bestehen, die relativ zum spurgeführten Fahrzeug eine im Wesentlichen horizontale Bewegung der Bremsvorrichtung im eingebauten Zustand zulassen.

Als im Wesentlichen horizontale ist eine Bewegung insbesondere entlang der Fahrtrichtung des spurgeführten Fahrzeugs, d. h. zwischen den Rädern benachbarter Achsen der Zwillingsachse zu verstehen. Im Wesentlichen horizontal ist die Bewegung, wenn bei der Bewegung im dreidimensionalen Raum die horizontale Bewegungskomponente den größten Betrag hat (hierzu im Folgenden noch mehr). Die horizontale Bewegungsrichtung ist dadurch definiert, dass das spurgeführte Fahrzeug auf dem Gleis steht und bezogen darauf eine horizontale Bewegung parallel zu den Gleisen erfolgt (Steigungen im Gleis können dabei vernachlässigt werden).

Die Aufhängung ermöglicht damit sozusagen eine schwimmende Lagerung der Bremsvorrichtung. Diese kann vorrangig zwischen den benachbarten Achsen der Zwillingsachse hin und her schwingen. Wird die Bremse aktiviert, so kann sich die Bremsvorrichtung zwischen den vier Rädern der Zwillingsachse ausrichten, indem sich die Bremsbeläge auf den gebremsten Rädern abstützen. Hierbei werden vorteilhaft Toleranzen ausgeglichen, die durch die Geometrie der Zwillingsachse und ihren Einbauort (beispielsweise ein Drehgestell, welches die Achsen der Zwillingsachse trägt), die Geometrie der Bremsvorrichtung sowie den Abnutzungsgrad der Bremsbeläge beeinflusst wird.

Bei der Lagerung der Bremsvorrichtung durch eine Aufhängung in der beschriebenen Weise werden die Vorteile des erfindungsgemäß verwendeten Abstandssensors besonders deutlich. Unabhängig davon, wie sich die Bremsvorrichtung zwischen den Rädern der Doppelachse bewegt, kann dennoch eine Relativbewegung zwischen den Teileinheiten der Bremsvorrichtung zuverlässig ermittelt werden, da der Abstand in dem durch die Bremsvorrichtung vorgegebenen Bezugssystem gemessen wird. Anders ausgedrückt wird der Abstand zwischen den charakteristischen Punkten der Teileinheiten in einem Koordinatensystem bestimmt, welches auf die Bremsvorrichtung bezogen ist und sich mit dieser mitbewegt.

Gemäß einer Variante sind die oben erklärten Aspekte der Erfindung dadurch bestimmt, dass die Messvorrichtung dazu eingerichtet ist, ein Signal auszusenden und einen reflektierten Anteil dieses Signals zu erfassen, wobei der Abstand aus der Zeitdifferenz zwischen dem Senden und dem Empfangen berechnet wird.

Ein nach diesem Funktionsprinzip aufgebautes Messverfahren ist vorteilhaft insbesondere für die rauen Umgebungen geeignet, wie sie an einer Zwillingsachse im Zugverkehr vorliegen. Dies liegt daran, dass das Messprinzip berührungslos funktioniert. Außerdem ist es möglich, den Abstandssensor (eventuell zusammen mit einem Prozessor zur rechnergestützten Auswertung des durch den Abstandssensor erzeugten Messsignals) als Baueinheit an der einen Teileinheit anzubringen und von dort den Abstand zu der anderen Teileinheit zu messen. Hierdurch ist es möglich, den Abstandssensor beispielsweise durch ein robustes Gehäuse vor Umwelteinflüssen zu schützen. Außerdem wird ein Nachrüsten des Abstandsensors zwecks Modernisierung von Bremsvorrichtungen vereinfacht.

Gemäß einer Variante sind die oben erklärten Aspekte der Erfindung dadurch bestimmt, dass der gemessene Abstand rechnergestützt mit einem Sollabstand verglichen wird.

Der Rückschluss aus einem Abstandswert auf den aktuellen Bremszustand einer Zwillingsachse / eines Drehgestells ergibt sich durch einen Vergleich zwischen dem Sollwert, einem Distanzwert für die Teileinheiten, der zuvor bei einem bekannten Bremszustand entsprechend einem Erwartungswert z.B. im Rahmen einer Kalibrierung ermittelt wurde (hierzu im Folgenden noch mehr). Entspricht der gemessene Abstand mit einer gewissen Toleranz dem Sollwert, kann auf den gleichen Bremszustand geschlossen werden. Dies gilt sowohl für den gelösten als auch für den angelegten Zustand der Bremsbeläge.

Gemäß einer Variante sind die oben erklärten Aspekte der Erfindung dadurch bestimmt, dass als Sollabstand
j) ein Bremsanschlagwert vorgegeben wird, der bei einem Anschlag durch einen Kraftschluss zwischen den Reibpartnern der Bremsvorrichtung gemessen wird, und/oder k) ein Lösereferenzwert vorgegeben wird, der bei einem Anschlag in einer Bremsmechanik oder einer vorgegebenen Stellung der Bremsmechanik im gelösten Zustand der Bremsvorrichtung gemessen wird.

Es kann somit erfindungsgemäß vorgesehen werden, dass sowohl der Zustand der angelegten Bremse als auch der Zustand der gelösten Bremse überwacht werden kann. Für beide Zustände ist ein Sollabstand zu berücksichtigen, nämlich der erste Sollabstand für den angelegten Zustand in Form des Bremsanschlagwertes und der zweite Sollabstand für den gelösten Zustand in Form des Lösereferenzwertes (bei dem es sich ebenfalls um einen Anschlagwert, also einen Löseanschlagwert handeln kann, wenn im gelösten Zustand der Bremse ein Anschlag die Lösebewegung der Bremse begrenzt). Der erste Sollabstand kann vorrangig dazu dienen, den Verlust von Bremsbelägen nachzuweisen, weil dies sprunghaft zu einer Vergrößerung des erzeugten Abstandes der beiden Teileinheiten im Zustand der angelegten Bremse führt. Der zweite Sollabstand kann dazu dienen, um zu ermitteln, ob die Bremse sich wieder vollständig lösen ließ. Wenn die Bremsvorrichtung beispielsweise verklemmt ist, wird diese den zweiten Sollabstand beim Lösen der Bremse nicht mehr einstellen können.

Bei einer typischen Bremsanlage ist zwischen den beiden Bremszuständen eine Distanzänderung von 5 ... 20 mm zu erwarten. Liegt bei einem Bremszustand der gemessene Abstand mehr als die erwartete Toleranz vom Erwartungswert entfernt, lässt dies darauf schließen, dass die Bremse nicht ordnungsgemäß arbeitet. Wie erwähnt, zu große Messwerte im angelegten Zustand lassen auf den Verlust eines Bremsklotzes oder eines anderen Teils der Bremsanlage schließen. Zu kleine Messwerte in diesem Zustand bedeuten entweder eine Fehlfunktion der Bremsanlage (Bremszylinder) oder ein Verklemmen der Mechanik hin.

Als Anschlag, den es zu überwachen gilt, ist bei der Bremsvorrichtung das Aufsetzen der Bremsbeläge auf den jeweils anderen Reibpartner der Bremse, vorzugsweise die Radreifen der Räder, zu verstehen. Die Kraftübertragung vom Aktor (beispielsweise Bremszylinder) auf die Bremse erfolgt dabei über die Teileinheiten der Bremsvorrichtung.

Gemäß einer Variante sind die oben erklärten Aspekte der Erfindung dadurch bestimmt, dass der Bremsanschlagwert als Kalibrierungswert für den Bremsanschlag und/oder der Lösereferenzwert als Kalibrierungswert für eine Referenzposition im gelösten Zustand der Bremse, beispielsweise ein Löseanschlag, gespeichert wird.

Der Verfahrensschritt einer Kalibrierung ist insbesondere von Vorteil, wenn die Bremsbeläge gerade erneuert wurden und somit noch keine Messwerte für die gewartete (oder auch neue) Bremsanlage vorliegen. Die Anschlagwerte / Referenzwerte, die dann durch ein Aktivieren bzw. Deaktivieren der Bremse als Bremsanschlagwert und Lösereferenzwert aus den zugehörigen Messwerten bestimmt werden, bilden dann eine Referenz für den Neuzustand der Bremsbeläge, die in einer Speichereinrichtung abgespeichert werden können.

Aber auch während der Nutzungsdauer von Bremsbelägen kann ein Kalibrierungsschritt durchgeführt werden. Beispielsweise kann turnusmäßig bei Wartungsmaßnahmen die Abnutzung der Bremsbeläge genau vermessen werden und anschließend für den vermessenen Zustand der Bremsbeläge neue Kalibrierungswerte erstellt werden.

Durch den Verschleiß der Bremsbeläge vergrößert sich der messbare Abstand im
Bremsanschlag im Laufe der Zeit immer mehr. Über die Gesamtlebensdauer der Bremsbeläge ist bei einer typischen Bremsanlage mit einer Vergrößerung des Bremsanschlagwertes von ca. 100 mm zu rechen. Diese ergibt sich durch die Abnutzung der beiden Bremsbeläge einer Seite der Zwillingsachse um jeweils bis zu 50 mm. Ein Verschleiß der Räder (über die Lebensdauer der Räder bis zu 90 mm des Raddurchmessers) ist im Vergleich zum Verschleiß der Bremsbeläge bezogen auf den Zeitraum der Lebensdauer der Bremsbeläge gering und kann daher vernachlässigt werden. Die Abnutzung der Bremsbeläge zwischen zwei aufeinanderfolgenden Bremsungen ist so klein, dass sie weniger als die anzustrebende Messtoleranz für den gemessenen Abstand beträgt.

Gemäß einer Variante sind die oben erklärten Aspekte der Erfindung dadurch bestimmt, dass der Bremsanschlagwert und/oder der gemessene Abstand rechnergestützt mit einem Grenzwert für den Sollabstand verglichen wird und eine Ausgabe erfolgt, ob der Anschlagwert den Grenzwert unterschreitet und/oder erreicht und/oder überschreitet.

Im Gegensatz zum Bremsanschlagwert und zum Lösereferenzwert ist der Grenzwert eine Größe, die für eine bestimmte Bremsvorrichtung konstruktiv bedingt ist. Es handelt sich somit um einen konstanten Wert, der sich während der Abnutzung der Bremsbeläge nicht ändert, sondern an den sich die gemessenen Messwerte bei fortschreitender Abnutzung der Bremsbeläge annähern. Der Grenzwert kann somit nach dessen Ermittlung (z. B. im Neuzustand der Bremsbeläge) dauerhaft in einer Rechenumgebung abgespeichert sein, die für die rechnergestützte Abwicklung des Verfahrens verwendet wird. Sobald der Grenzwert bei angelegter Bremse erreicht wird und beispielsweise kein Verlust eines Bremsbelags vorliegt, kann dies als Indiz dafür gewertet werden, dass ein Auswechseln der Bremsbeläge erforderlich ist.

Wird dieser Grenzwert erreicht, kann die Information (in Form einer Wartungsmeldung) entweder elektronisch an den für die Wartung zuständigen Mitarbeiter versenden werden, oder dem Wagenmeister mittels einer am Fahrzeug angebrachten Anzeigeeinrichtung (z.B. der Anzeige eines Brems-Monitoring-Systems im oder am Fahrzeug) visualisieren.

Gemäß einer Variante sind die oben erklärten Aspekte der Erfindung dadurch bestimmt, dass rechnergestützt eine Messreihe von Bremsanschlagwerten und/oder eine Messreihe von Lösereferenzwerten erstellt wird und der aktuelle Bremsanschlagwert und/oder Lösereferenzwert mit zumindest einem früheren Bremsanschlagwert und/oder Lösereferenzwert der Messreihe verglichen wird.

Da der Verschleiß der Bremsbeläge zwischen zwei Bremsungen im Mikrometerbereich liegt, wird man unter normalen Umständen zwischen zwei Bremsungen messtechnisch keine Veränderung feststellen können. Die Erstellung einer Messreihe macht es aber möglich, die Entwicklung zu verfolgen. Dies ermöglicht beispielsweise Prognosen über den Verlauf der Abnutzung und bevorstehende Wartungsmaßnahmen wie den Wechsel der Bremsbeläge.

Gemäß einer Variante sind die oben erklärten Aspekte der Erfindung dadurch bestimmt, dass die Differenz zwischen dem aktuellen Bremsanschlagwert mit einem früheren Bremsanschlagwert der Messreihe berechnet wird und eine Ausgabe erfolgt, ob diese Differenz eine maximal zulässige Differenz unterschreitet und/oder erreicht und/oder überschreitet.

Dabei wird die maximal zulässige Differenz aus Erfahrungswerten für eine bestimmten Bremsenbauart derart festgelegt, dass diese oberhalb eines für den gewöhnlichen Verschleiß der Bremsbeläge geltenden Wert liegt. Dies bedeutet, dass ein Bremsanschlagwert, der diese maximal zulässige Differenz überschreitet, aufgrund eines außerordentlichen Ereignisses gemessen wurde. Unter der Voraussetzung einer einwandfreien Funktion des Messverfahrens deutet die Überschreitung der maximal zulässigen Differenz daher auf den Verlust mindestens eines Bremsklotzes hin. Dieser Verlust wird in der Bremsvorrichtung nämlich dadurch ausgeglichen, dass diese unter Einstellung eines größeren Stellweges des betreffenden Stellelementes so lange verstellt wird, bis alle Bremsbeläge und die mindestens (zumindest teilweise) eine Aufnahme des fehlenden Bremsklotzes den Bremsanschlag erreicht haben.

Geht also mindestens einer der Klötze (wie die Bremsbeläge auch genannt werden) verloren, vergrößert sich der für das Gestänge bei der Bremsung zurückzulegende Weg schlagartig. Diese Wegvergrößerung äußert sich auch in einer schlagartigen und messbaren Veränderung des besagten Stellweges. Dies kann durch einen einfachen Vergleich mit dem zuletzt berechnetem Anschlagwert der Messreihe ermittelt werden.

Da ein verlorener Bremsklotz während der Fahrt nicht ersetzt werden kann, reicht es normalerweise aus, die Messung vor dem Fahrtbeginn oder nach Beendigung der Fahrt durchzuführen und den Messwert abzuspeichern. Der Vergleich wird dann immer zwischen dem aktuellen Wert und dem gespeicherten Wert durchgeführt (für diesen Anwendungsfall reicht somit die Betrachtung einer Messreihe mit zwei Anschlagwerten, dem aktuellen und dem davorliegenden).

Gemäß einer Variante sind die oben erklärten Aspekte der Erfindung dadurch bestimmt, dass das Messen des Abstandes im Stillstand des Fahrzeugs durchgeführt wird.

Ein großer Vorteil liegt darin, dass im Stillstand während des Messverfahrens die Bremsen zum Zwecke der Erzeugung der Messwerte (kurzzeitig) aktiviert und deaktiviert werden können. So ist es möglich, sowohl einen Bremsanschlagwert als auch einen Lösereferenzwert in kurzer Folge nacheinander zu ermitteln. Dieses Verfahren wird auch als Bremsprobe bezeichnet und ist im Bahnverkehr vor Fahrtantritt eines Zuges vorgeschrieben. Diese kann mit dem Verfahren vorteilhaft automatisch durchgeführt werden, sodass das Erfordernis entfällt, dass ein Mitarbeitender einen Fahrzeugverband (normalerweise einen Güterzug) zwecks Durchführung der Bremsprobe abschreiten muss.

### Exemplarische Ausführungsbeispiele der Zeichnung

Weitere Einzelheiten der Erfindung werden nachfolgend anhand der Zeichnung beschrieben. Gleiche oder sich entsprechende Zeichnungselemente sind in den einzelnen Figuren jeweils mit den gleichen Bezugszeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Varianten der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Komponenten auch mit den vorstehend beschriebenen Varianten der Erfindung kombinierbar.
Figur 1 zeigt ein Ausführungsbeispiel der erfindungsgemäßen Vorrichtung (Drehgestell als Teil des Fahrzeugs mit Bremsvorrichtung) mit ihren Wirkzusammenhängen zwischen den zum Einsatz kommenden Funktionskomponenten schematisch in dreidimensionaler Darstellung.
Figur 2 zeigt ein Ausführungsbeispiel einer Rechenumgebung für die Vorrichtung gemäß Figur 1 als Blockschaltbild der einzelnen Funktionskomponenten und der zwischen diesen ausgebildeten Schnittstellen, wobei einzelne Recheninstanzen Programmmodule ausführen, die jeweils in einem oder mehreren der beispielhaft dargestellten Computer ablaufen können und wobei die gezeigten Schnittstellen demgemäß softwaretechnisch in einem Computer oder hardwaretechnisch zwischen verschiedenen Computern ausgeführt sein können.
Figur 3 zeigt ein Diagramm, bei dem die Änderung des Abstandes der Teileinheiten in Abhängigkeit von Einzelmessungen n, die Messreihen ergeben, dargestellt ist.
Figur 4 und 5 zeigen ein Ausführungsbeispiel des erfindungsgemäßen Verfahrens als Flussdiagramm, wobei die gezeigten Verfahrensschritte einzeln oder in Gruppen durch Programmmodule verwirklicht sein können und wobei die Recheninstanzen und Schnittstellen gemäß Figur 2 beispielhaft angedeutet sind.

### Detaillierte Beschreibung der Zeichnung

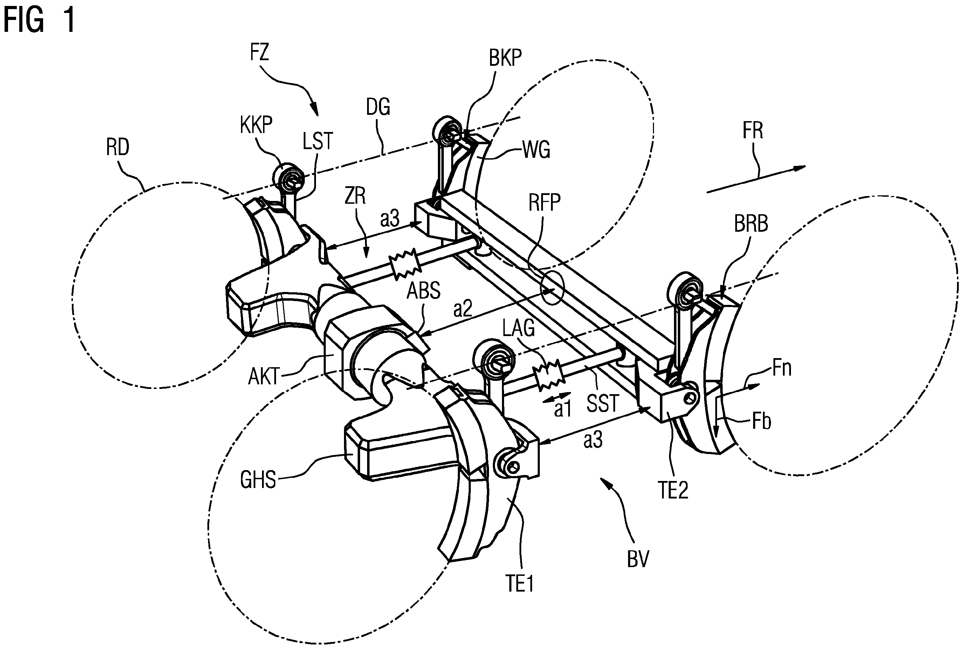

In Figur 1 ist ein Fahrzeug FZ durch ein schematisch dargestelltes Drehgestell DG angedeutet, welches die Räder RD in zwei Achsen einer Zwillingsachse lagert. Schematisch dargestellt ist weiterhin eine Bremsvorrichtung BV in einem Zwischenraum ZR der Achsen angeordnet, welches eine Bewegung eines Aktors AKT auf die Bremsbeläge BRB überträgt, wobei die Bremsbeläge BRB mit einer Normalkraft Fn auf nicht dargestellte Radreifen der Räder RD wirken, wobei eine Bremskraft Fb entsteht.

Die Bremsvorrichtung BV ist dreidimensional mit einer ersten Teileinheit TE1 und einer zweiten Teileinheit TE2 dargestellt. Die erste Teileinheit TE1 weist ein Gehäuse GHS auf, welches eine nicht näher dargestellte Mechanik zur Übertragung der Stellbewegung des ebenfalls in dem Gehäuse GHS untergebrachten Aktors AKT beherbergt. Die Mechanik überträgt in ebenfalls nicht dargestellter Weise eine Stellbewegung auf Schubstangen SST, die zumindest hauptsächlich eine translatorische Bewegung durchführen, um einen Abstand zwischen den beiden Teileinheiten (TE1 ... TE2) zu vergrößern oder zu verkleinern (angedeutet in Figur 1 durch Abstände a1 ... a3 darstellende Doppelpfeile parallel zur Schubstangenausrichtung).

Die Bremsvorrichtung BV ist mithilfe von vier Lagerstangen LST im Drehgestell DG aufgehängt. Die Lagerstangen LST weisen ihrerseits Kugelköpfe KKP auf, welche in an sich bekannter Weise (nicht dargestellt) in dem Drehgestell DG befestigt sind. Die Kugelköpfe KKP lassen eine Bewegung vorwiegend in horizontaler Richtung, und zwar in einer Fahrtrichtung FR bzw. entgegen dieser Fahrtrichtung FR zu. Dabei beschreiben die nicht zu erkennenden Aufhängungen der Lagerstangen LST in der Bremsvorrichtung BV Kreisbögen um die durch die Kugelköpfe KKP definierten Festpunkte im Drehgestell DG. Da die Lagerstangen LST jedoch im Wesentlichen senkrecht ausgerichtet sind, führt der technisch relevante Kreisausschnitt dieser Kreisbögen im Wesentlichen zu einer horizontalen Bewegung. Die Kugelköpfe KKP lassen auch eine gewisse Bewegung in horizontaler Richtung senkrecht zur Fahrtrichtung FR zu. Diese wird jedoch konstruktiv durch Wangen WG von Bremsköpfen BKP, die die Bremsbeläge BRB tragen, begrenzt.

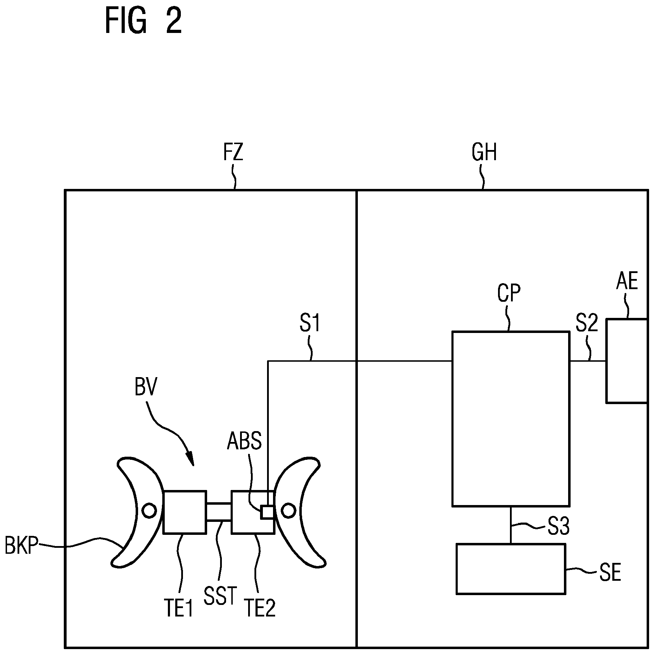

An der ersten Teileinheit TE1 ist ein Abstandssensor ABS angebracht. An der gegenüberliegenden Teileinheit, der zweiten Teileinheit TE2, ist (optional) eine Reflexionsplatte RFP angebracht, die eine von dem Abstandssensor ABS ausgesendete Strahlung, vorzugsweise Radarstrahlung, reflektiert, sodass die reflektierte Strahlung durch den Abstandssensor ABS erfasst werden kann (die nicht näher dargestellte umgekehrte Anordnung mit dem Abstandssensor an der zweiten Teileinheit und der optionalen Reflexionsplatte an der ersten Teileinheit ist genau o vorstellbar). Der mindestens eine Abstandssensor ABS kommuniziert über eine nicht näher dargestellte Schnittstelle (S1, S2 in Figur 2) mit einer Ausgabeeinrichtung AE, wobei die Ausgabeeinrichtung AE auch einen Computer zur Auswertung der empfangenen Messwerte enthält (vgl. auch Figur 2) Alternativ können auch Kabelschnittstellen verwendet werden (nicht dargestellt).

Der Ort der Anordnung des Abstandssensors ABS ist in Figur 1 exemplarisch gewählt. Da sich die beiden Teileinheiten innerhalb einer horizontalen Ebene parallel zum nicht dargestellten Gleis linear voneinander weg bzw. aufeinander zu bewegen, kann der Abstand auch an anderen Stellen im Zwischenraum ZR gemessen werden. Dargestellt ist ein erster Abstand a1, der an einem Längenausgleich LAG einer der Schubstangen SST gemessen werden kann, ein zweiter Abstand a2, der durch den beispielhaft dargestellten Abstandssensor ABS im Zusammenwirken mit der Reflexionsplatte RFP in oder nahe einer nicht dargestellten senkrecht und in Fahrtrichtung ausgerichteten Symmetrieebene gemessen wird (und ohne Beschränkung der Allgemeinheit für die weitere Beschreibung der Ausführungsbeispiele dient) und ein dritter Abstand a3, der alternativ jeweils außen an den Teileinheiten zwischen den Rädern der benachbarten Achsen durch zwei nicht dargestellte Abstandsensoren gemessen werden kann.

In Figur 2 ist das Zusammenwirken der an dem erfindungsgemäßen Verfahren beteiligten Funktionselemente schematisch als Blockschaltbild dargestellt. Zu erkennen ist ein das Fahrzeug FZ symbolisierender Block und ein Block GH, welches sowohl den Abstandssensor ABS als auch eine Ausgabeeinrichtung AE umfasst. und mit einem Computer CP über eine zweite Schnittstelle S2 verbunden ist. Im Fahrzeug FZ ist exemplarisch die Bremsvorrichtung BV aus Figur 1 dargestellt, allerdings ohne die optionale Reflexionsplatte RFP.

Der Abstandssensor ist über eine erste Schnittstelle S1 mit dem Computer CP verbunden, der die Messergebnisse auswertet. Der Computer CP ist überdies über eine dritte Schnittstelle S3 mit einer Speichereinrichtung SE verbunden, wobei in der Speichereinrichtung SE berechnete Sollwerte in Form einer Messreihe sowie Kalibrierungswerte für eine Inbetriebnahme der Bremsen und Grenzwerte für deren Abnutzung dort abgespeichert werden können. Über die Ausgabeschnittstelle S2 ist der Computer CP mit der Ausgabeeinrichtung AE verbunden, wobei die Ausgabeeinrichtung AE vorzugsweise ein Display ist, welches Informationen bezüglich des Betriebs der Bremse darstellen kann, oder ein System mit beispielsweise einer Funkschnittstelle, das die Informationen direkt zu einer zentralen Stelle, z. B der Lokomotive, übertragen kann (nicht dargestellt). Die Ausgabeeinrichtung AE kann im einfachsten Fall durch (mindestens) eine Leuchte ausgebildet sein, die ohne weitere Informationen lediglich die Erforderlichkeit einer Wartung (Blinken bei Abnutzung der Bremsbeläge BRB über die Verschleißgrenze hinaus, Verlust von Bremsklötzen / Bremsbelägen) und den aktuellen Zustand der Bremse (leuchten entspricht angelegt / nicht Leuchten entspricht gelöst) anzeigt.

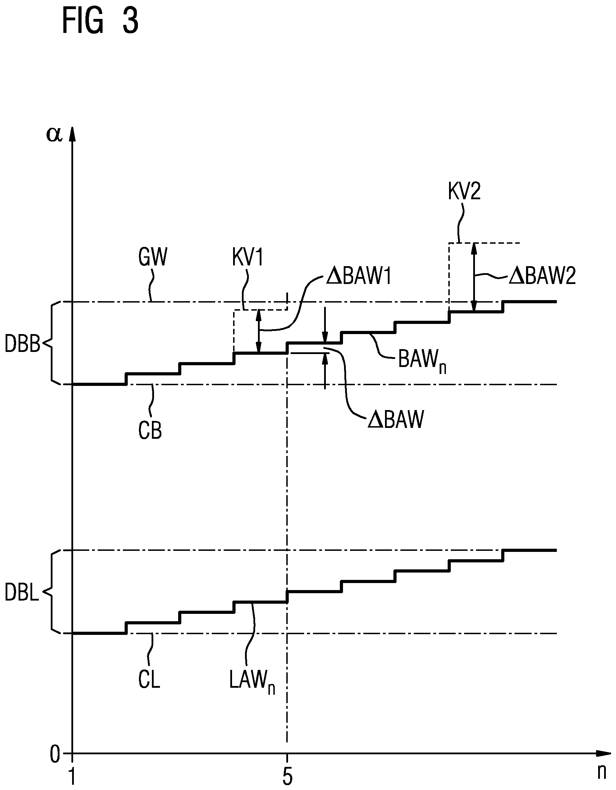

In Figur 3 ist dargestellt, wie sich der Sollwert eines charakteristischen Abstands, nämlich ein Bremsanschlagwert BAW und ein Lösereferenzwert LAW (gemessen wie zu Figur 2 beschrieben) im Laufe erfolgter einzelner Messungen n durch die Abnutzung der Bremsbeläge verändert. Hierbei wird deutlich, dass Messungen nur zu diskreten Zeitpunkten, beispielsweise jeweils vor Inbetriebnahme des Fahrzeugs, durchgeführt werden, und sich dadurch ein stufenförmiger Verlauf ergibt. Dargestellt sind jeweils einzelne Messungen n für den Bremsanschlagwert BAWn sowie einzelne Messungen n für den Lösereferenzwert LAWn. Der Lösereferenzwert LAW sowie der Bremsanschlagwert BAW werden jeweils aus den mit dem Abstandssensor ABS zwischen der ersten Teileinheit TE1 und der zweiten Teileinheit TE2 gemessenen Abständen ermittelt.

Bei der ersten Messung gemäß Figur 3 (n = 1) befinden sich die Bremsbeläge im Neuzustand. Mit dieser Messung wird die erfindungsgemäße Messanordnung kalibriert, wobei ein Kalibrierungswert CL für den Lösereferenzwert LAW1 und ein Kalibrierungswert CB für den Bremsanschlagwert BAW1 berechnet werden. Diese können in der Speichereinrichtung SE (vgl. Figur 2) abgelegt werden.

Bei den nachfolgenden Messungen vergrößern sich die gemessenen zweiten Abstände a2 durch Abnutzung der Bremsbeläge (und damit auch die bei jeder Bremsung oder Bremsprobe gemessenen Bremsanschlagwerte BAWn). Auch die Lösereferenzwerte LAWn können sich verändern, wie in Figur 3 dargestellt, wenn in Abhängigkeit vom Verschleiß der Bremsbeläge eine mechanische Nachführung der bei der Lösung der Bremse vorgesehenen Referenzposition durchgeführt wird (abhängig von der Bauform der Compact-Bremse). Findet eine solche Nachführung der Referenzposition nicht statt, bleibt der Lösereferenzwert LAW konstant.

Für die Entwicklung des Bremsanschlagwertes BAWn ist in Figur 3 ein Grenzwert GW eingezeichnet, der angibt, dass die Bremsbeläge ihre Verschleißgrenze erreicht haben. Der Kalibrierungswert für den Bremsanschlag CB sowie der Grenzwert GW definieren einen Driftbereich für den Bremsanschlag DBB. Ein Driftbereich DBL für den Lösereferenzwert ergibt sich dadurch automatisch durch die mechanische Nachführung der Referenzposition (wenn es sich um einen Anschlag handelt, insbesondere des Löseanschlags).

Wie bereits erwähnt, entstehen die Stufen in dem Verlauf des Bremsanschlagwertes BAW durch die Abnutzung der Bremsbeläge, wobei zwischen einzelnen Messungen n, n + 1, jeweils eine verschleißbedingte Differenz zweier Bremsanschlagwerte ΔBAW liegt. Diese ist normalerweise klein und liegt im Mikrometerbereich. Um Messungenauigkeiten zu vermeiden, kann daher bei Erstellung einer Messreihe (die durch den Stufenverlauf gemäß Figur 3 dargestellt ist) auch auf einer weiter zurückliegenden Messung, beispielsweise bei einer Messung n auf den Bremsanschlagwert BAWn-10 zurückgegriffen werden.

In Figur 3 ist auch ein Sprung des Bremsanschlagwertes BAW beispielhaft bei einem Verlust eines Bremsklotzes KV1 bzw. bei einem Verlust von zwei Bremsklötzen KV2 dargestellt. Es wird deutlich, dass die Differenz ΔBAW1 sowie die Differenz ΔBAW2 bedeutend höher ausfallen als die Differenz ΔBAW bei regulärem Bremsklotzverschleiß, da der die mögliche Relativbewegung zwischen den beiden Teileinheiten TE1, TE2 (gemessen durch die Änderung des zweiten Abstandes a2) sprunghaft ansteigt. Hierdurch wird der Verlust von Bremsklötzen erkannt und kann über die Ausgabeeinrichtung AE ausgegeben werden.

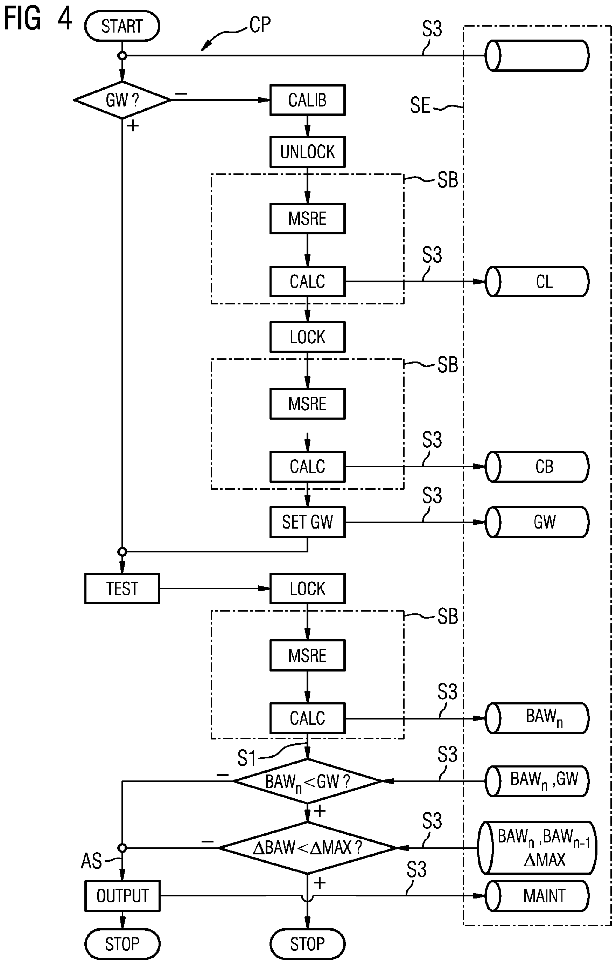

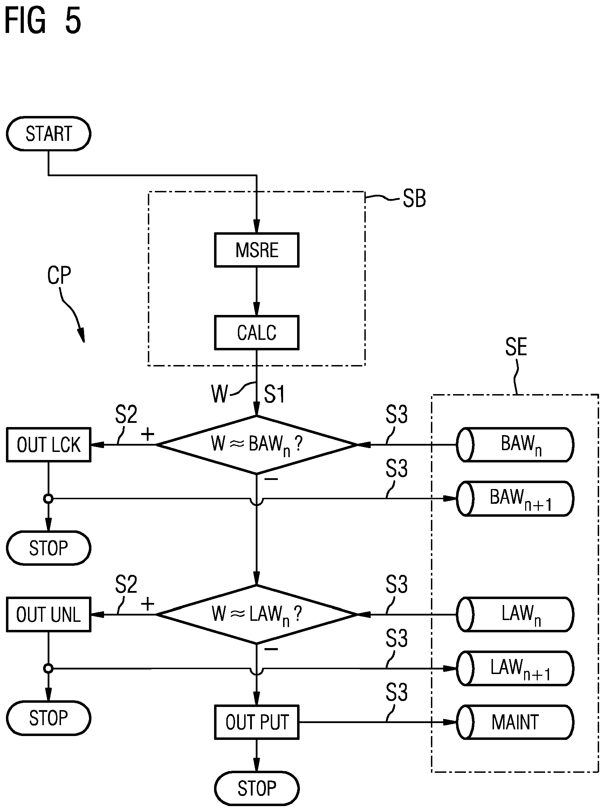

Im Folgenden soll das erfindungsgemäße Verfahren beispielhaft, wie im Flussdiagramm gemäß Figur 4 bzw. 5 dargestellt, schrittweise erläutert werden. In Figur 4 bzw. 5 ist außerdem beispielhaft durch Kästen angedeutet, in welchen Funktionskomponenten bzw. Recheninstanzen gemäß Figur 1 und 2 die einzelnen Schritte durchgeführt werden können. Soweit hierbei die Schnittstellen gemäß Figur 1 und 2 genutzt werden, sind diese auch in Figur 4 bzw. 5 gekennzeichnet.

Der Figur 4 lässt sich beispielhaft der Verfahrensablauf bei dem erfindungsgemäßen Messverfahren entnehmen. Nachdem das Verfahren gestartet wurde, werden die verfügbaren Parameter aus der Speichereinrichtung SE geladen. In einem Abfrageschritt wird geprüft, ob bereits ein Grenzwert GW verfügbar ist. Wenn nicht, handelt es sich um neue Bremsbeläge, weswegen ein Kalibrierungsschritt CALIB durchgeführt wird.

Beim Kalibrieren werden die Bremsen in einem Deaktivierungsschritt UNLOCK zunächst gelöst. Dann erfolgt in einem Messschritt MSRE des Abstandssensors ABS die Ermittlung eines Abstandswertes. In einem anschließenden Berechnungsschritt CALC wird der Kalibrierungswert für die Referenzposition CL berechnet und in die Speichereinrichtung SE übergeben.

Die Berechnung des Kalibrierungswerts für die Referenzposition CL sowie weiterer Lösereferenzwerte LAW sowie Bremsanschlagwerte BAW (inklusive des Kalibrierungswertes für den Bremsanschlag CB) werden bei dem Ausführungsbeispiel gemäß Figur 4 durch eine Sensorbaugruppe SB durchgeführt, die auch Rechenkapazität (welche die Funktionalität des Computers CP gemäß Figur 2 übernimmt) für den Berechnungsschritt CALC zur Verfügung stellt. Dies ist allerdings nur ein Ausführungsbeispiel. Möglich ist es auch, dass die Messschritte für den zweiten Abstand a2 an den Computer CP übergeben werden. Dies stellt die Konfiguration dar, welche gemäß Figur 2 beschrieben wurde. Für Figur 4 (und ebenso für Figur 5) gilt in diesem Fall, dass die mit Strichpunktlinie angedeutete Systemgrenze für die Sensorbaugruppe SB entfallen würde, ohne dass sich an dem Ablauf des Verfahrens sonst etwas ändern würde.

Im nächsten Schritt erfolgt ein Aktivierungsschritt LOCK für die Bremse, sodass die Bremsbeläge am Bremsanschlag anliegen. Der vorstehend beschriebene Mess- und Berechnungsschritt MSRE und CALC werden wiederholt und liefern den Kalibrierungswert für den Bremsanschlag CB (der bei einer Konfiguration gem. Figur 2 durch den Computer CP an die Speichereinrichtung SE übergeben wird).

Im nachfolgenden Schritt kann ausgehend von dem Kalibrierungswert für den Bremsanschlag CB und der Kenntnis der Gegebenheiten der Bremsanlage, die formeltechnisch in der Speichereinrichtung SE abgelegt sein kann, im einem Bestimmungsschritt für den Grenzwert SET GW der Grenzwert GW berechnet (und bei einer Konfiguration gem. Figur 2 durch den Computer CP in die Speichereinrichtung SE übergeben werden).

Wenn ein Grenzwert GW bereits existiert, kann der Kalibrierungsschritt CALIB ausgelassen werden und es erfolgt ein Prüfschritt TEST, um den Zustand der Bremse zu überprüfen. Zu diesem Zweck wird ein Aktivierungsschritt der Bremse LOCK durchgeführt, soweit diese noch nicht angezogen ist. Anschließend erfolgt die Messung und Berechnung MSRE, CALC des zweiten Abstandes a2 durch die Sensorbaugruppe SB, wie oben bereits ausgeführt. Es kann dann der aktuelle Bremsanschlagwert BAWn (im Falle einer Konfiguration gem. Figur 2 durch den Computer CP an die Speichereinrichtung SE) übergeben werden. Anschließend prüft der Computer CP, ob der aktuelle Bremsanschlagwert BAWn den Grenzwert GW noch unterschreitet. Zu diesem Zweck wird der Grenzwert GW aus der Speichereinrichtung SE ausgelesen. Für den Fall, dass der Grenzwert GW erreicht oder überschritten ist, erfolgt in einem Ausgabeschritt OUTPUT die Ausgabe eines Wartungssignals, welches direkt an die Ausgabeeinrichtung AE gemäß Figur 2 gesendet werden kann oder als Wartungssignal MAINT in der Speichereinrichtung SE abgelegt werden kann, um später angezeigt zu werden.

Wird der Grenzwert GW durch den Bremsanschlagwert BAWn unterschritten, erfolgt eine weitere Abfrage, für die aus der Speichereinrichtung SE der vorher ermittelte Bremsanschlagwert BAWn-1 sowie die maximal zulässige Differenz ΔMAX für eine Veränderung des Bremsanschlagwerts BAW ausgelesen wird. Ist die berechnete Differenz der Bremsanschlagwerte BAWn und BAWn-1 kleiner als die maximal zulässige Differenz ΔMAX, ist die Prüfung beendet und das Verfahren wird gestoppt. Ist das besagte Maximum ΔMAX überschritten, bedeutet dies, dass die Bremse mindestens einen Bremsklotz verloren hat, sodass ebenfalls in dem Ausgabeschritt OUTPUT für das Wartungssignal eine Ausgabe durch die Ausgabeeinrichtung AE erfolgt oder das Wartungserfordernis MAINT durch den Computer CP an die Speichereinrichtung SE zur späteren Ausgabe übergeben wird. Auch danach wird das Verfahren gestoppt.

In Figur 5 ist eine andere Funktion dargestellt, die mittels der erfindungsgemäßen Sensoranordnung erfüllt werden kann. Hierbei geht es um die Erkennung des Bremszustandes, also, ob sich die Bremsbeläge in der aktivierten (angezogenen) Stellung oder der deaktivierten (gelösten) Stellung befinden. Nach dem Start des Verfahrens wird der Mess- und Berechnungsschritt MSRE, CALC durch die Sensorbaugruppe SB durchgeführt. Hierbei wird der Wert W berechnet, der für das weitere Verfahren zur Verfügung steht. In einer nachfolgenden Abfrage wird überprüft, ob der Wert W ungefähr dem aktuellen Bremsanschlagwert BAWn entspricht. Ist dies der Fall, erfolgt ein Ausgabeschritt OUT LCK, dass die Bremse aktiviert, also in Bremsstellung ist. Optional kann der Wert Wals neuer Bremsanschlagwert BAWn+1 von dem Computer CP an die Speichereinrichtung SE übergeben werden. Anschließend wird das Verfahren gestoppt.

Entspricht der Wert W nicht ungefähr dem Bremsanschlagwert BAWn, so wird in einem weiteren Abfrageschritt geprüft, ob der Wert W ungefähr dem aktuellen Lösereferenzwert LAWn entspricht. Ist dies der Fall, erfolgt ein Ausgabeschritt OUT UNL, dass die Bremse deaktiviert, also geöffnet, ist. Optional kann der Wert W als aktueller Lösereferenzwert LAWn+1 durch den Computer CP an die Speichereinrichtung SE übergeben werden. Danach wird das Verfahren gestoppt.

Wenn auch der zweite Abfrageschritt negativ ausfällt, d. h. keine Ähnlichkeit zwischen dem Wert W und dem aktuellen Lösereferenzwert LAWn besteht, erfolgt der Ausgabeschritt OUTPUT für ein Wartungssignal. Außerdem wird durch den Computer CP ein Wartungserfordernis MAINT an die Speichereinrichtung SE übergeben. Danach wird das Verfahren gestoppt.

Bei der Frage, ob der Wert W ungefähr dem Bremsanschlagwert BAWn oder dem Lösereferenzwert LAWn entspricht, sind einerseits Messfehler zu berücksichtigen, die sich in Kenntnis der Genauigkeit des Messverfahrens ohne Weiteres bestimmen lassen (daher ist eine ungefähre Übereinstimmung, also innerhalb eines Toleranzintervalls gefordert). Außerdem ist zu berücksichtigen, dass, wie bereits zu Figur 3 erklärt, zwischen den Messungen abnutzungsbedingt eine Differenz ΔBAW zwischen der ermittelten Bremsanschlagwerten ergeben kann. Dasselbe gilt ggf. auch für den Lösereferenzwert LAW. Diese als Drift bezeichnete Veränderung in den Driftbereichen für den Bremsanschlag DBB und für die Referenzposition DBL (vgl. Figur 3) ist ebenfalls zu berücksichtigen, wenn das Toleranzintervall für eine ungefähre Übereinstimmung des Wertes W festgelegt wird.

### Bezugszeichenliste / List of Reference

- a1: erster Abstand
- a2: zweiter Abstand
- a3: dritter Abstand
- ABS: Abstandssensor
- BKP: Bremsköpfen
- BRB: Bremsbeläge
- BV: Bremsvorrichtung
- DG: Drehgestell
- Fb: Bremskraft
- Fn: Normalkraft
- FR: Fahrtrichtung
- GHS: Gehäuse
- KKP: Kugelköpfe
- LAG: Längenausgleich
- LST: Lagerstangen
- RFP: Reflexionsplatte
- SST: Schubstangen
- TE1: ersten Teileinheit
- TE2: zweiten Teileinheit
- WG: Wangen
- ZR: Zwischenraum

- FZ: Fahrzeug
- DG: Drehgestell
- RD: Rad
- AKT: Aktor
- BRB: Bremsbelag

- AE: Ausgabeeinrichtung
- CP: Computer
- SE: Speichereinrichtung
- SB: Sensorbaugruppe
- S1 ... S3: Schnittstelle
- CALIB: Kalibrierungsschritt
- UNLOCK: Deaktivierungsschritt für Bremse
- ANGL: Messchritt für Winkelstellung
- REFC: Messschritt für Referenzwert
- CALC: Berechnungsschritt für Stellwinkel
- LOCK: Aktivierungsschritt für Bremse
- SET GW: Bestimmungsschritt für Grenzwert
- TEST: Prüfschritt
- OUTPUT: Ausgabe Wartungssignal
- MAINT: Wartungserfordernis
- OUT LCK: Ausgabeschritt für aktivierte Bremse
- OUT UNL: Ausgabeschritt für deaktivierte Bremse
- n: Messung
- CL: Kalibrierungswert für die Referenzposition
- CB: Kalibrierungswert für den Bremsanschlag
- DBB: Driftbereich Bremsanschlag
- DBL: Driftbereich Referenzposition
- BAW: Bremsanschlagwert
- LAW: Lösereferenzwert
- ΔBAW: Differenz zweier Bremsanschlagwerte
- ΔMAX: Maximal zulässige Differenz
- GW: Grenzwert
- KV1: Klotzverlust (ein Bremsbelag)
- KV2: Klotzverlust (zwei Bremsbeläge)
- W: Wert

## Patentansprüche

1. Bremsvorrichtung zum Einbau in den Zwischenraum (ZR) zwischen den Rädern einer Zwillingsachse eines spurgeführten Fahrzeugs, wobei
a) die Bremsvorrichtung (BV) aus zwei relativ zueinander beweglichen Teileinheiten, nämlich einer ersten Teileinheit (TE1) mit Bremsbelägen (BRB) für die Räder der ersten Achse der Zwillingsachse und einer zweiten Teileinheit (TE2) mit Bremsbelägen (BRB) für die Räder der zweiten Achse der Zwillingsachse besteht,
b) die Teileinheiten im eingebauten Zustand derart verschiebbar gelagert sind, dass durch das Verschieben der Teileinheiten ein Kontakt zwischen den Bremsbelägen (BRB) und den Rädern zustande kommt, **dadurch gekennzeichnet, dass**
c) in einer der Teileinheiten der Bremsvorrichtung (BV) mindestens ein Abstandssensor (ABS) angeordnet ist,
d) der Abstandssensor (ABS) eingerichtet ist, einen Abstand zwischen der ersten Teileinheit (TE1) und der zweiten Teileinheit (TE2) zu messen.

2. Bremsvorrichtung nach Anspruch 1, **dadurch gekennzeichnet, dass** die Bremsvorrichtung (BV) als selbsttragende Baueinheit ausgeführt ist, welche mechanische Lager für eine Befestigung am spurgeführten Fahrzeug aufweist.

3. Bremsvorrichtung nach Anspruch 1 oder 2, **dadurch gekennzeichnet, dass** die mechanischen Lager aus einer Aufhängung bestehen, die relativ zum spurgeführten Fahrzeug eine im Wesentlichen horizontale Bewegung der Bremsvorrichtung (BV) im eingebauten Zustand zulassen.

4. Spurgeführtes Fahrzeug mit einer Zwillingsachse und einer in einem Zwischenraum (ZR) der Zwillingsachse eingebauten Bremsvorrichtung (BV), wobei
e) die Bremsvorrichtung (BV) aus zwei relativ zueinander beweglichen Teileinheiten, nämlich einer ersten Teileinheit (TE1) mit Bremsbelägen (BRB) für die Räder der ersten Achse der Zwillingsachse und einer zweiten Teileinheit (TE2) mit Bremsbelägen (BRB) für die Räder der zweiten Achse der Zwillingsachse besteht,
f) die Teileinheiten in dem Zwischenraum (ZR) angeordnet sind und in diesem derart verschiebbar gelagert sind, dass durch das Verschieben der Teileinheiten ein Kontakt zwischen den Bremsbelägen (BRB) und den Rädern zustande kommt,
g) ein Abstandssensor (ABS) für die Ermittlung einer Bremsstellung in dem Fahrzeug angeordnet ist, **dadurch gekennzeichnet, dass**
h) in einer der Teileinheiten der Bremsvorrichtung (BV) ein Abstandssensor (ABS) angeordnet ist, i)
der Abstandssensor (ABS) eingerichtet ist, einen Abstand zwischen der ersten Teileinheit (TE1) und der zweiten Teileinheit (TE2) zu messen.

5. Abstandssensor mit einer Messvorrichtung und mit einer Befestigungsvorrichtung, **dadurch gekennzeichnet, dass** die Befestigungsvorrichtung dazu eingerichtet ist, mit einer Teileinheit einer Bremsvorrichtung (BV) gemäß einem der voranstehenden Ansprüche verbunden zu werden.

6. Abstandssensor nach Anspruch 5, **dadurch gekennzeichnet, dass** die Messvorrichtung dazu eingerichtet ist, ein Signal auszusenden und einen reflektierten Anteil dieses Signals zu erfassen, wobei der Abstand aus der Zeitdifferenz zwischen dem Senden und dem Empfangen berechnet wird.

7. Verfahren zum Betreiben einer Bremsvorrichtung (BV) nach einem der Ansprüche 1 bis 3 oder eines spurgeführten Fahrzeugs mit einer Bremsvorrichtung (BV) nach Anspruch 4, **dadurch gekennzeichnet, dass** mit einem Abstandssensor (ABS) ein Abstand zwischen einer ersten Teileinheit (TE1) und einer zweiten Teileinheit (TE2) der Bremsvorrichtung (BV) gemessen wird.

8. Verfahren nach Anspruch 7, **dadurch gekennzeichnet, dass** der gemessene Abstand rechnergestützt mit einem Sollabstand verglichen wird.

9. Verfahren nach Anspruch 8, **dadurch gekennzeichnet,**
**dass** als Sollabstand j)
ein Bremsanschlagwert (BAW) vorgegeben wird, der bei einem Anschlag durch einen Kraftschluss zwischen den Reibpartnern der Bremsvorrichtung (BV) gemessen wird, und/oder k)
ein Lösereferenzwert (LAW) vorgegeben wird, der bei einem Anschlag in einer Bremsmechanik oder einer vorgegebenen Stellung der Bremsmechanik im gelösten Zustand der Bremsvorrichtung (BV) gemessen wird.

10. Verfahren nach Anspruch 9, **dadurch gekennzeichnet, dass** der Bremsanschlagwert (BAW) als Kalibrierungswert (CL) für den Bremsanschlag und/oder der Lösereferenzwert (LAW) als Kalibrierungswert (CL) für eine Referenzposition im gelösten Zustand der Bremse gespeichert wird.

11. Verfahren nach einem der Ansprüche 9 oder 10, **dadurch gekennzeichnet, dass** der Bremsanschlagwert (BAW) und/oder der gemessene Abstand rechnergestützt mit einem Grenzwert (GW) für den Sollabstand verglichen wird und eine Ausgabe erfolgt, ob der Anschlagwert den Grenzwert (GW) unterschreitet und/oder erreicht und/oder überschreitet.

12. Verfahren nach einem der Ansprüche 9 bis 11, **dadurch gekennzeichnet, dass** rechnergestützt eine Messreihe von Bremsanschlagwerten (BAW) und/oder eine Messreihe von Lösereferenzwerten (LAW) erstellt wird und der aktuelle Bremsanschlagwert (BAW) und/oder Lösereferenzwert (LAW) mit zumindest einem früheren Bremsanschlagwert (BAW) und/oder Lösereferenzwert (LAW) der Messreihe verglichen wird.

13. Verfahren nach einem der Ansprüche 9 bis 12, **dadurch gekennzeichnet, dass** die Differenz zwischen dem aktuellen Bremsanschlagwert (BAW) mit einem früheren Bremsanschlagwert (BAW) der Messreihe berechnet wird und eine Ausgabe erfolgt, ob diese Differenz eine maximal zulässige Differenz unterschreitet und/oder erreicht und/oder überschreitet.

14. Verfahren nach einem der Ansprüche 7 bis 13, **dadurch gekennzeichnet, dass** das Messen des Abstandes im Stillstand des Fahrzeugs (FZ) durchgeführt wird.

15. Computerprogramm, umfassend Programmbefehle, die bei der Ausführung des Programms durch einen Computer diesen dazu veranlassen, das Verfahren nach einem der Ansprüche 7 - 13 auszuführen.
